# EUROPEAN PATENT APPLICATION

(11) **EP 1 250 007 A2**
(43) Date of publication of application: **16.10.2002**
(21) Application number: 02252598.4
(22) Date of filing: 11.04.2002
(51) Int. Cl.: H04N 7/16, H04N 7/173, H04N 5/00

(54) **Control of access to television programmes**

(30) Priority: 12.04.2001 GB 0109183
(71) Applicant: Pace Micro Technology PLC, Shipley, West Yorkshire BD18 3LF (GB)
(72) Inventor: Matey, Jesus, Leeds, LS4 2SZ (GB)
(74) Representative: Wood, Graham

(57) **Abstract**

The invention which is the subject of this application relates to generation of broadcast data for television or radio programmes and the ability to select to make available certain restricted programme material for viewing. The restricted programme material can be for example video on demand and is available for viewing within predetermined time periods. The system of the invention compares the time of user selection of restricted programme material and/or the time of display of restricted programme material with respect to a predetermined time period during which the restricted programme material is allowed to be viewed. If the time period selected by the user matches the predetermined time period then the programme material itself is generated for viewing or a particular format of display is generated. If the time of the user selection does not match or fall within the predetermined time period then the restricted programme material is not available for viewing and/or a second format of display is generated.

## Description

The invention which is the subject of this application relates to the use and reception of data which is broadcast from a remote location and which data can be processed to generate any or any combination of television programmes, radio programmes, programme information, home shopping services or the like.

The use of digital data broadcast systems now allows a relatively large number of television and radio programme channels to be received at any premises which is equipped with the appropriate apparatus for receiving the data and then processing the same. As a result of the diversity of channels, many channels tend to have become specialised and show programmes which relate to a specific theme. The themes vary widely and can include, for example, films, wildlife, documentaries, sport and/or adult material. With certain channels, the programmes may only be shown, or be allowed to be shown, at certain time intervals such as, for example, adult material channels may only broadcast programmes at late night and early morning. Another form of viewing material is via Video on Demand (VoD) where the viewer can request to view specified material at the same instant or shortly thereafter and, if permitted, the material can be provided to the viewer from data sent by the broadcaster.

A problem with the showing of programmes at only certain times is that, outwith these times, a viewer who may wish to watch the material when it is subsequently transmitted, cannot identify the particular material to be shown from the programme information provided as said information cannot be displayed outwith the time period.

A further problem if the prevention of certain users, such as children, from viewing restricted material such as adult content material. It is known to utilise security (PIN) codes but it is common for children to either circumvent the security system or become aware of the code to be input, thereby achieving access to the material.

The aim of the present invention is to provide a method of operation of a television system which allows a user of the system to be aware that material is available for display between certain time periods and what the material is and yet still restrict, as necessary the viewing of the material within designated time periods.

In a first aspect of the invention there is provided a television system for the reception of broadcast data and, from said data, the generation of television and/or radio programme material over a range of user selectable channels and/or via a Video on Demand (VoD) service, and at least a portion of the material is provided for restricted access in that it is only permitted to be viewed within a predetermined time period, said system including means for generating an on-screen display of information relating to specific programme material and/or channels and characterised in that in the generation of a display which includes information relating to the restricted material, said display is selectively generated in a first format if the information is to be displayed during the predetermined time period and a second format if the information is to be displayed outwith the predetermined time period.

In one embodiment the first format display includes all available information about the programme material, and, if the material is accessible via VoD, can include price and ordering information.

In the second format of display, the display typically includes no detailed information about the restricted material but rather indicates that material is available on a specific channel or via a specific VoD service and the predetermined period of time during which the same is available.

The decision as to whether to display the first or second format of display is made with reference to the time at which the viewer makes the request to view the information and that time is compared with respect to the stored times which represent the start and end of the predetermined time periods. If the selection is made within the predetermined time period, the first format is displayed and if the request is made outwith the period the second display format is shown.

In a further aspect of the invention there is provided a television system for the reception of broadcast data and the generation of television and/or radio programme material over a range of user selectable channels and/or via a Video on Demand (VoD) service and at least a portion of the material is subject to restricted viewing conditions in that it is only available for viewing within a predetermined time period, and characterised in that if a viewer selects to view a programme of said restricted material, the time of the request being made is compared with the parameters of, the start and end times of the selected programme material and the start and end times of the predetermined time period and only if the start and end times of the selected programme lie within the predetermined time period is the selected programme material be displayed to the viewer.

If, upon a viewer selection being made for a restricted programme, if a portion of said programme would be required to be displayed to the viewer outwith the predetermined time period for viewing the material, the selection is refused and an indication, such as an on-screen display, is generated to inform the user of the reason for the rejection.

This aspect of the invention is particularly advantageous with a VoD service as it prevents the television system at the viewer's premises from accepting the viewer selection if it is not possible to show the material and thereby prevents the viewer from being charged to watch a programme which they would not be able to watch to completion due to the time restrictions.

In a further aspect of the invention there is provided a television system for the reception of broadcast data and the generation of television and/or radio programme material over a range of viewer selectable channels and/or via a Video on Demand (VoD) service and at least a portion of said programme material is restricted and characterised in that a viewer selection of a portion of said restricted material is only accepted by the apparatus provided at the viewer's premises if the viewer is identified by the apparatus as a person authorised to view the restricted material.

In one embodiment the determination of the viewer's ability to make the selection is achieved by comparing a viewer identification code required to be entered by the viewer at the time of selection, with a code held in memory. If the codes match, the selection can be made, if there is no match, the selection is not processed.

It should be appreciated that the aspects discussed above can be used independently or in any combination to suit specific system requirements.

In a yet further aspect of the invention there is provided a method for the determination of whether or not to permit, in a television system, the display of restricted programme material and/or information relating thereto, said method comprising the steps of, entering into memory or another reference source, start and end times which define a predetermined period of time, identifying a type or types of programme as restricted programme material which is available for viewing only during the predetermined period of time and representing the same via identification data, said identification data broadcast to a viewer's receiving apparatus along with broadcast data from which the programme material can be generated and upon a viewer selection of the restricted programme material, the time of the viewer selection is compared with the start and end times of the predetermined time period and as a result of the comparison, a decision is made with respect to the restricted programme material.

In one embodiment the display decision is whether or not to allow the selected restricted programme material to be generated and displayed to the viewer.

In another embodiment the display decision is the format of an onscreen display generated to the viewer in relation to the viewer selected programme material.

Specific embodiments of the invention are now described with reference to the accompanying drawings, wherein:-
Figure 1 illustrates first and second formats of a display which can be selectively shown in accordance with the invention; and
Figure 2 illustrates the sequence of steps followed in a method in accordance with one aspect of the invention.

The provision of television systems to received data broadcast from a remote location is well known. The typical television system comprises a display screen and speakers connected to a broadcast data receiver which receives via satellite, cable or terrestrial system data which has been transmitted by one or a number of programme broadcasters from a emote location. The broadcast data receiver therefore decodes the received data and into video, audio and /or auxiliary services such as Video on Demand purchasing system and programme information displays as appropriate.

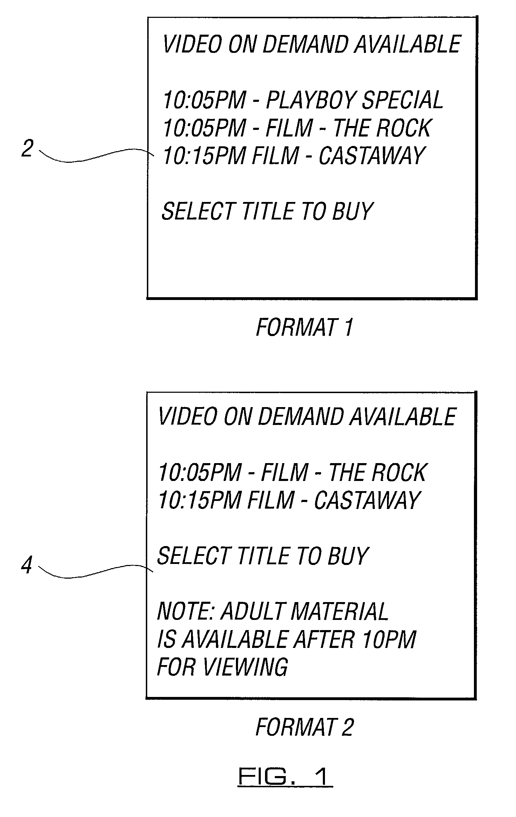

Referring firstly to Figure 1 there is illustrated one embodiment of the invention, in this case with respect to a Video on Demand programme service. Two formats of display are shown, 2, 4 which can be generated on the screen of, for example, a television set of the television system. The format which is displayed is determined by the time at which the display is to be generated in response to a user request as follows.

In some areas of operation of the television system there is a legal or advisory requirement or a user can select that certain programme material, for example, adult content material can only be shown within a certain time period, say 10pm to 5.30 am. Thus, in accordance with the invention the adult programme material is designated restricted material and identified as such by the broadcast data. The predetermined time period during which the same can be displayed starts at 10pm and finishes at 5.30 am. Thus, if the viewer wishes to obtain information on the Video on Demand material which is available after 10pm and makes the request at 10.01pm, i.e. within the predetermined time period, the format display 2 is shown which includes the restricted programme material information showing that, for example, Playboy Special is available at 10.05pm for selection. The viewer can then, if they wish, select to purchase and view the same. However, if the viewer makes the same request at say 4pm, the display format 4 is displayed as the request is made outwith the predetermined time period and so the information related to the "Playboy Special" restricted material is omitted. However a message 6 is generated to inform the viewer that if they make the request within the predetermined period of time there is restricted material information to be displayed.

Thus in accordance with this first aspect of the invention, when generating the display, the processors and software in the system apparatus, typically in the broadcast data receiver (BDR), will consider the content of the list of restricted material the settings for the display of the same and the time of the request and, in this example, Adult material information will only be displayed between 10pm and 5.30 am.

If, when approaching the end of the predetermined period of time, this information is still displayed when it is about to be 5.30 am, the list is regenerated, not displaying the adult content and if the viewer then selects "Adult" in the search engine, there will be the display 6 indicating that Adult information is no longer available. If the list is opened when it is at 10 pm, the list is regenerated including adult information. Preferably this regeneration is done automatically, via software timers that will time in and out at 10pm and 5.30am respectively. These timers are created when one of the lists are open and they will be cancelled when the lists are closed. If they timeout, the list is refreshed with the right information.

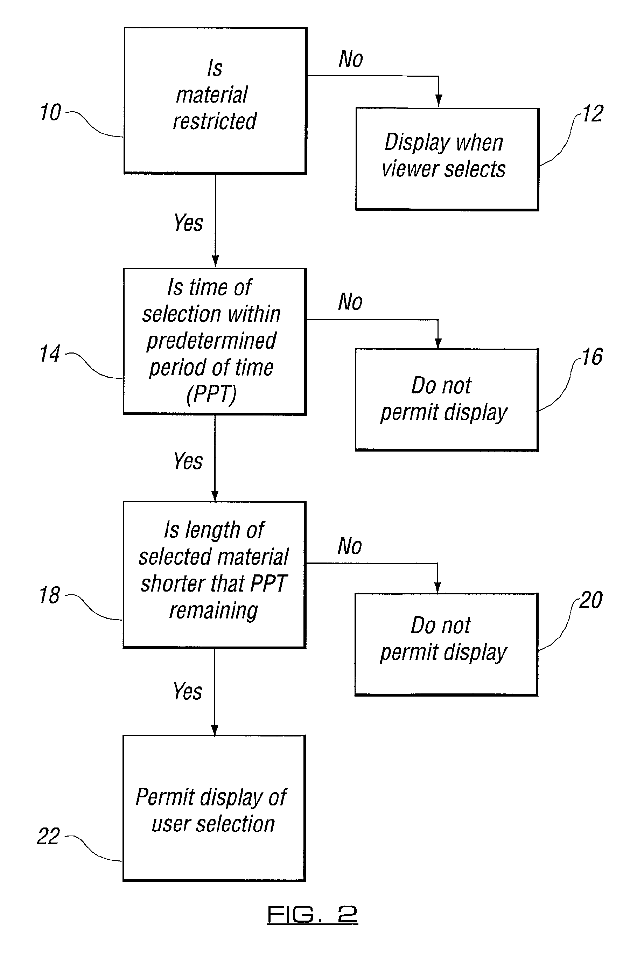

Figure 2 illustrates a further aspect of the invention in terms of a method for selecting whether to generate a programme from selected extracted programme material following a user selection.

When there is a request from the viewer to watch a VOD event, the Programme guide system, from which the request is typically made by the user and which is displayed on screen, checks the time of the request before requesting the event. The guide knows the length of the event and also the time position at which the viewer requests to watch the event. If there is not enough time to watch it left within the predetermined period of time, the request is not passed to the VOD server. The decision is made by the BDR at the beginning of the process to avoid the situation where the user pays for an event and he/she can not watch it completely.

Thus the first step is to identify the restricted programme material 10 typically by including code data in the service information (SI) data transmitted to the BDR and which the BDR decodes and interprets. If the material is not restricted it can be shown upon viewer selection at any time 12. If it is restricted then the time of the viewer selection of the programme is identified 14. If the time is outside the predetermined period of time then no display is permitted 16. If the time is inside, the length of the selected programme is determined 18 and if the length of time is longer than the length of time remaining of the predetermined period of time, the selection and display is not permitted 20. If there is sufficient time left, the viewer is allowed to make the selection 22 and then view the restricted material.

Thus in accordance with the invention, restricted programme information is prevented from being selected and displayed when it should not be displayed but the viewer is informed that this decision has taken place and he/she knows that there might be something on in the predetermined period of time even if no events are displayed. Furthermore it is ensured that the restricted material, such as adult content including all of video, audio and text are not available for children (unless they have access to the TV after 10pm) regardless of any security code system so that even if the child can breach the security code the restricted material is not available.

The BDR or STB Software (SW) which is used to achieve the invention can be split into 3 main blocks as follows:
- Drivers and operating system.
- Middleware, consisting of a set of servers and interfaces providing an Application Programme Interface (API) to the application layer.
- Applications, in this case, an Electronic or Interactive programme guide (EPG)

All the SW required for this idea belongs to the EPG. The only thing the platform code should provide is the information about the type of service (adult, news, etc). This is done in the SI database server when acquiring the NIT and SDT information. This database provides the EPG with the VOD schedule, including the type of service.

The Software architecture of the EPG is relevant for the implementation of this idea.

The EPG Software is also divided in blocks. For this idea, we need to consider the following blocks, which are indeed different processes:
- Screen process: this process consists of a set of contexts (defined by a combination of video, audio, graphics and key actions) and the mechanism to navigate through them. There is always one active context.
- Channel process: This process is responsible of the acquisition of the channel table from the SI database, the construction of a selectable channel list and the tuning requests.
- Reminder process: This process is responsible for the storage in non volatile random access memory NVRAM of all the reminders set by the user. These reminders can be programme reminders for an event broadcast in one of the normal channels, or VOD bookings for a particular time.

There are other blocks that are not relevant for this idea (conditional access process, control process, time process, etc).

It is important to understand how those 3 processes work together.

The channel process acquires the SI information to build the list of available channels, and request tuning for the first channel in the list.

The default screen context is the TV context, where there are no graphics but just video and audio for the tuned channel. The TV context handles keys like channel up or channel down to indicate the channel process that the user wants to tune to a different channel. It also handles other keys to change context. For example it is possible to enter the VOD library context by pressing a key sequence in a remote control device, and the VOD library with a different one. Booking lists for VOD result in a graphic display containing the list of booked events (VOD or TVOD). The user accesses these contexts by surfing to, predesignated channels such as channel 0 or channel 999.

The user sets a reminder for an event through the now-next display context (video, audio and a browser bar containing now-next information) or by booking a television on demand (TVOD) event from the video library. The reminder process stores the reminders in non volatile memory, including the start time, name of event, and type of event, very important for the implementation of the current idea for Pay Per View (PPV) events.

When the time stored for the first reminder is equal to the current time, the reminder process sends a message to the screen process indicating so. The screen then displays an indication that the desired event (normal or TVOD) is about to start.

When the user requests the TVOD booking list, the reminder process sends only the reminders related to TVOD events.

The VOD booking list is stored in a different part of non-volatile memory, as Video on demand services are not related to reminders as, as the name suggests, the start time is in response to the user selection, there is no predefined start time for a VOD event. As a result extra-functionality is required from the EPG process in order to match the requirements:

There is a function in the channel process, in charge of tuning to a TVOD event. This function is called vCHANNEL_TVOD_Tune() and the channel identifier is passed as a parameter (uiChannelId). For this idea, it is needed that the type of TVOD event is passed as a parameter (uiGenre). This function decides whether to initiate the tuning process, display the PIN entry or cancel the request according to the current time and the type of event. This is the extra code needed:

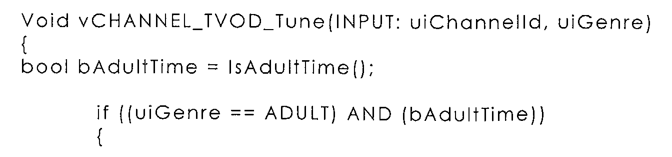

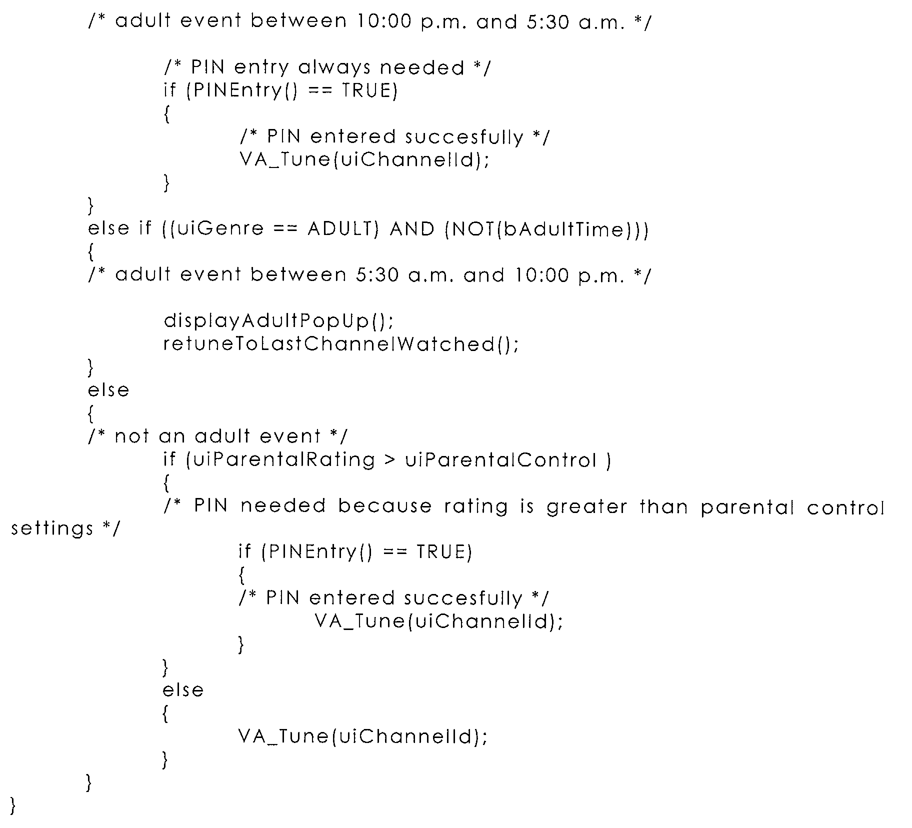

The reminder process is responsible for storing new reminders in the reminder list, storing and retrieving the reminder list from non-volatile memory and notifying the screen context when the next reminder is due to happen. For this particular idea, information about the type of TVOD event (uiGenre) has to be stored together with the title and the rest of information in the reminder list, for all the reminders. Reminders from normal programmes (not TVOD) do not need this information, so a default value is stored as the type of event.

The reminder function is changed in accordance with the invention :
vREMINDER_GetReminderList()

This function is called from the screen process when a list of reminders is to be displayed. An input parameter indicates the reminder process if the list to be displayed is a TVOD list or a list of TV programmes. If the list to be displayed is a TVOD list, the reminder process checks the time of the request to decide whether to include adult events or not.

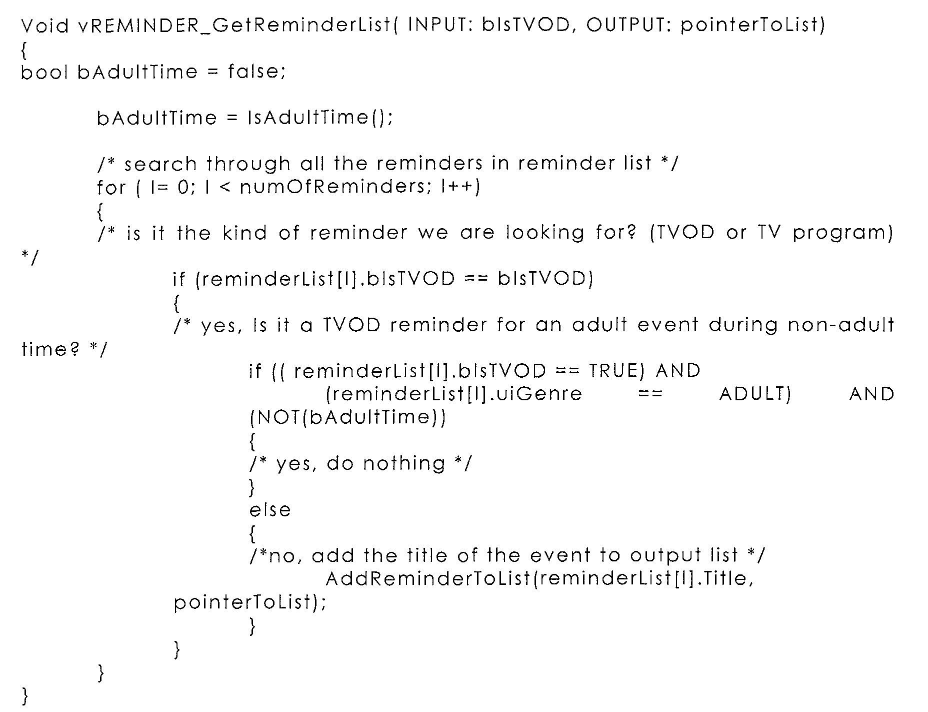

The screen process consists of a set of contexts at least one of which is always active. Some contexts can be on top of another. A context is defined by a combination of stream components (video, audio, teletext, subtitles), graphics and key actions. All the contexts have a similar structure. There are 6 functions that are defined in all the contexts:
- Open: This function is called when a new context becomes active. Variables are initialised here and the combination of graphics, video, etc is defined.
- Close: Frees memory related to the context.
- Hide: This function is called when an active context is overlayed by another context.
- Reveal: This function is called when an overlaying context is removed and the hidden context becomes active.
- Message Handler: It handles messages sent to the screen process when the context is active.
- Key Handler: It handles the key presses when the context is active.

These are the contexts affected by the implementation of this idea:

The Video On Demand Library is the main VOD screen context, where all the available VOD titles are displayed. The format of the context allows the user to select a type of VOD event (news, movies, sport, adult). The default value is set to movies, so when this page is entered, a list of movies is shown. The user can, however, change it to adult, and a list of adult events is displayed, but only with the predetermined time interval of, for example, between 10:00 p.m. and 5:30 a.m. At any other time, a display is generated indicating that there are entries available after 10pm.

A timer mechanism has to be implemented to update the screen automatically, in case the context is open for a period of time, including the adult time boundaries. There is always one timer running. The timer will be set to 10:00 p.m. if the current time is between 5:30 a.m. and 10:00 p.m. and will be set to 5:30 a.m. if between 10:00 p.m. and 5:30 a.m.

The content of the list of available titles is updated when a timeout message occurs thus changing the decision which needs to be made as whether to include the restricted material titles or not. This is the change made when the restricted material is adult material

These are the specific changes required:

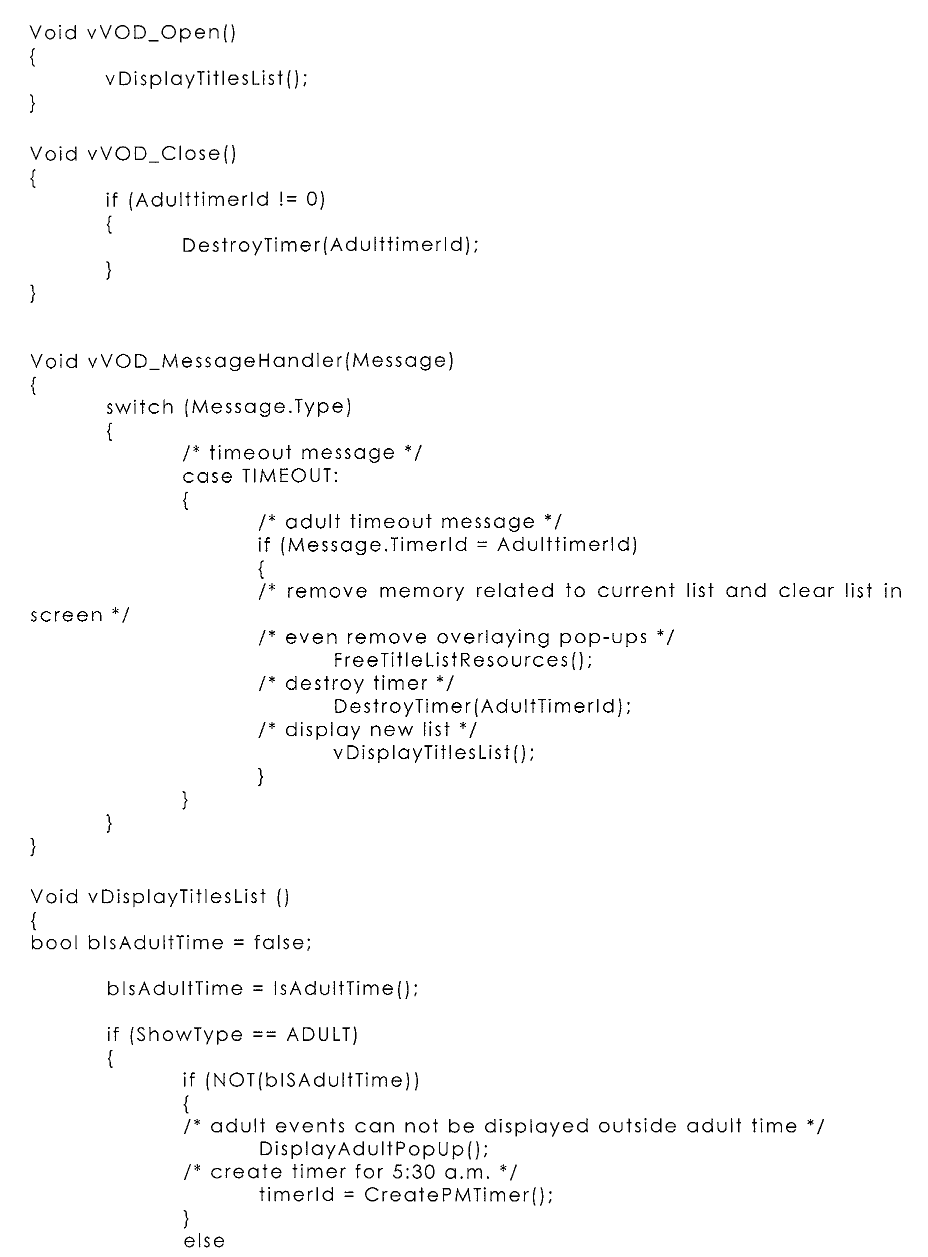

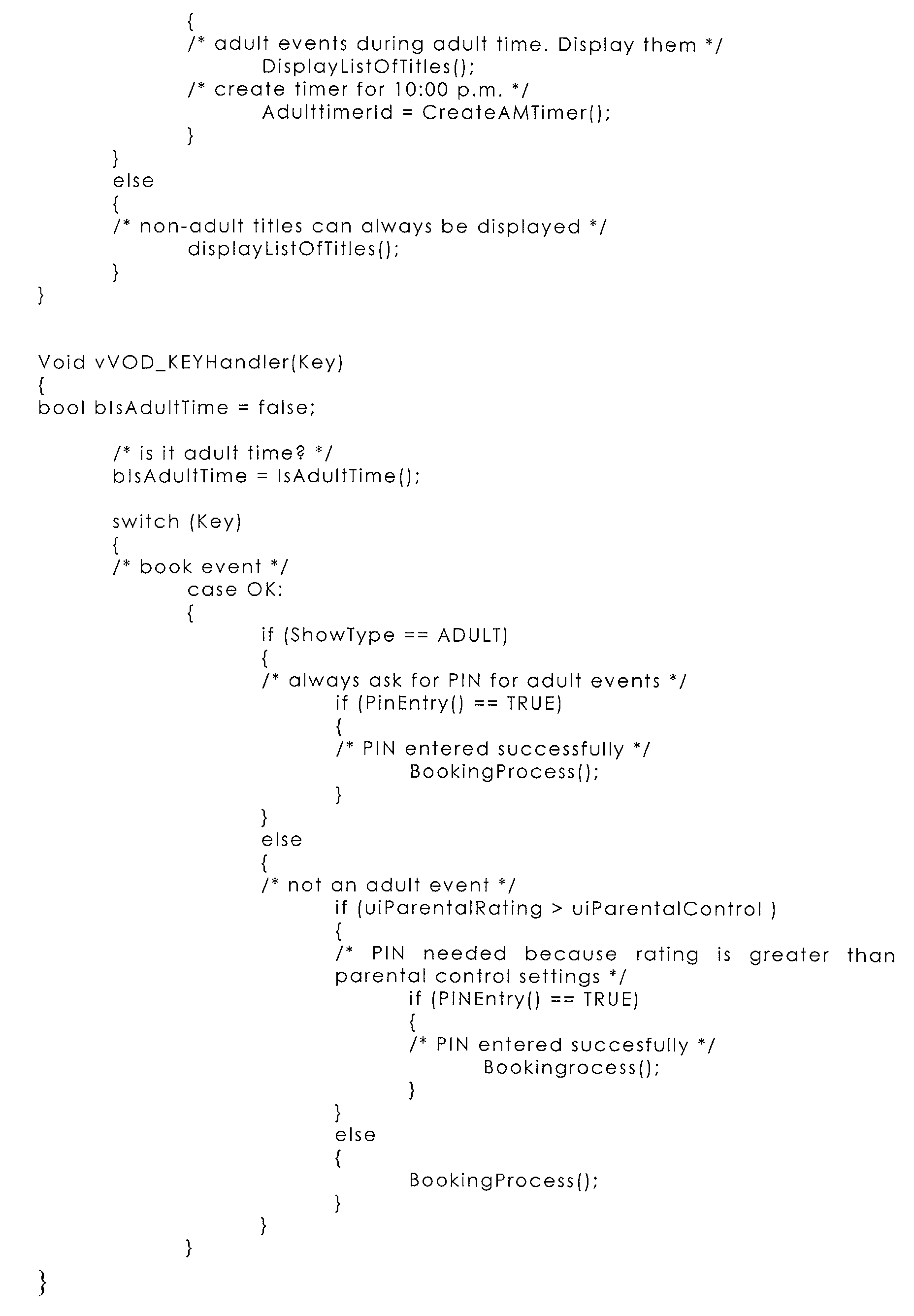

The VOD Booking List is the screen display for all the user selected VOD bookings made and the content of the list is stored in NVRAM and it might include adult and non-adult events. Adult events are only shown during adult times.

The content of the list is updated when a timeout message occurs, making the decision whether to include adult titles or not.

Once the user presses OK over a title displayed on screen, the tuning process begins. If the type of event is adult, the PIN entry is displayed regardless of the parental control settings. 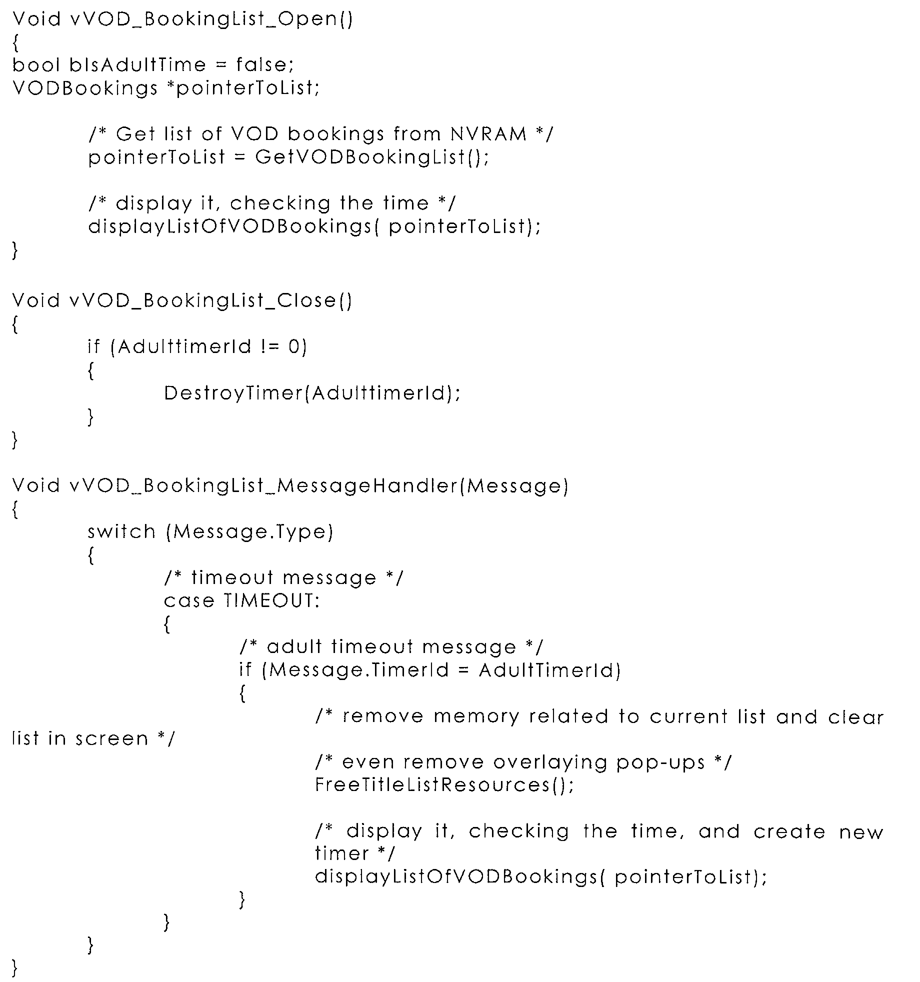 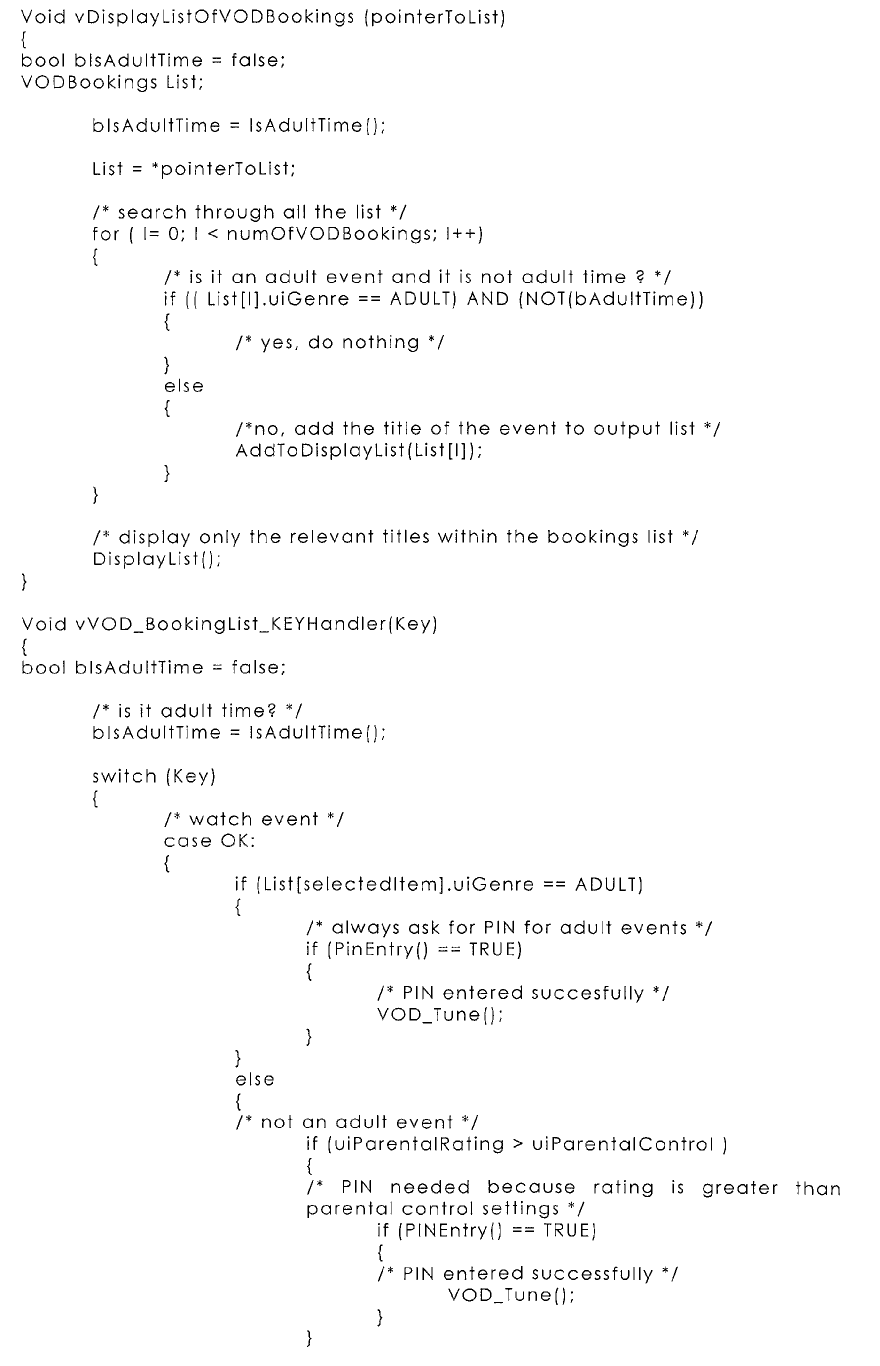 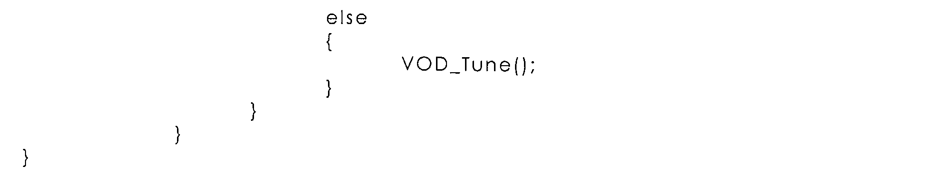 VOD TV is the active context when a VOD event is being watched. Remote Control Unit (RCU) keys act as VCR actions (FF, REW, PLAY, STOP, PAUSE).

The VOD session will not be stopped at 5:30 a.m. for adult events. The user can watch until the end of the event. However, for this specific idea, some operations for the restricted material programme are not allowed at certain times; such as
- REW and PAUSE can only be done within restricted times for restricted stored material.
- PLAY can only be issued within the restricted times, or after FF.

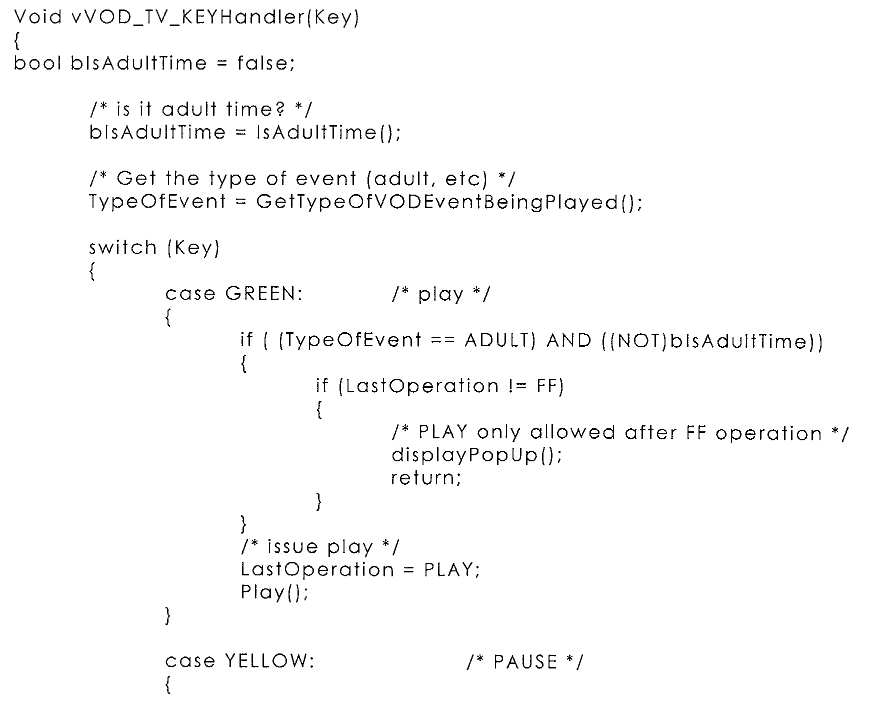

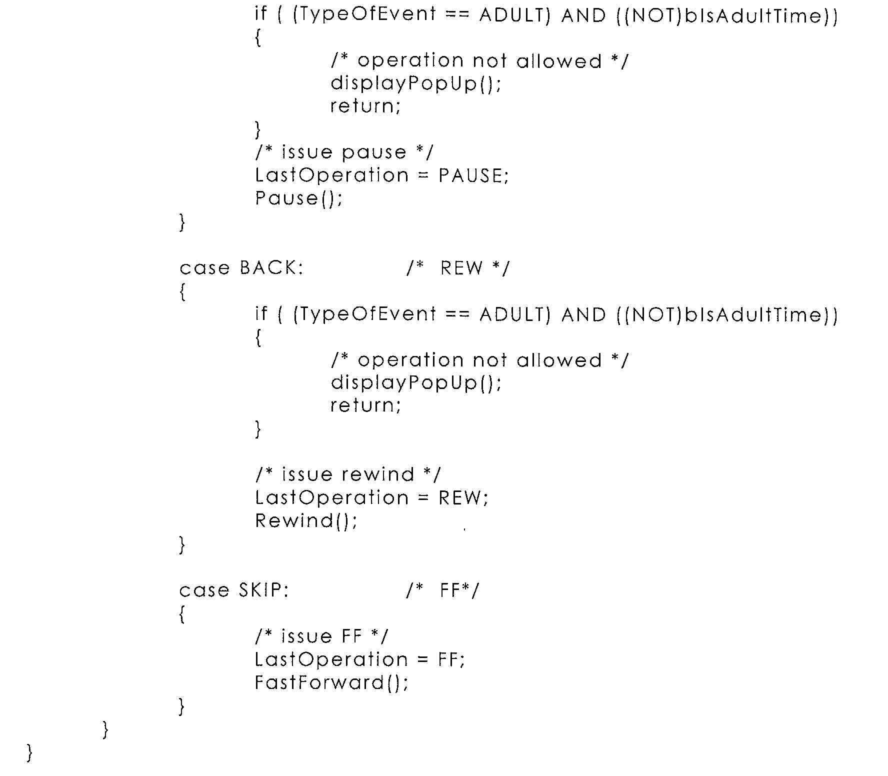

The TVOD Library is the main TVOD screen context, where all the available TVOD titles are displayed. The format of the context allows the user to select a type of TVOD event (news, movies, sport, adult) and the day of the week. The default value is set to movies, so when this page is entered, a list of movies is shown. The user can, however, change it to adult, and a list of adult events should be displayed only between 10:00 p.m. and 5:30 a.m. Any other time, a pop-up will appear indicating that there will be some entries in the screen after 10:00 p.m.

A timer mechanism has to be implemented to update the screen automatically, in case the context is open for a period of time, including the adult time boundaries. There is always one timer running. The timer will be set to 10:00 p.m. if the current time is between 5:30 a.m. and 10:00 p.m. and will be set to 5:30 a.m. between 10:00 p.m. and 5:30 a.m.

The content of the list of available titles is updated when a timeout message occurs, making the decision whether to include adult titles or not.

These are the specific changes required:

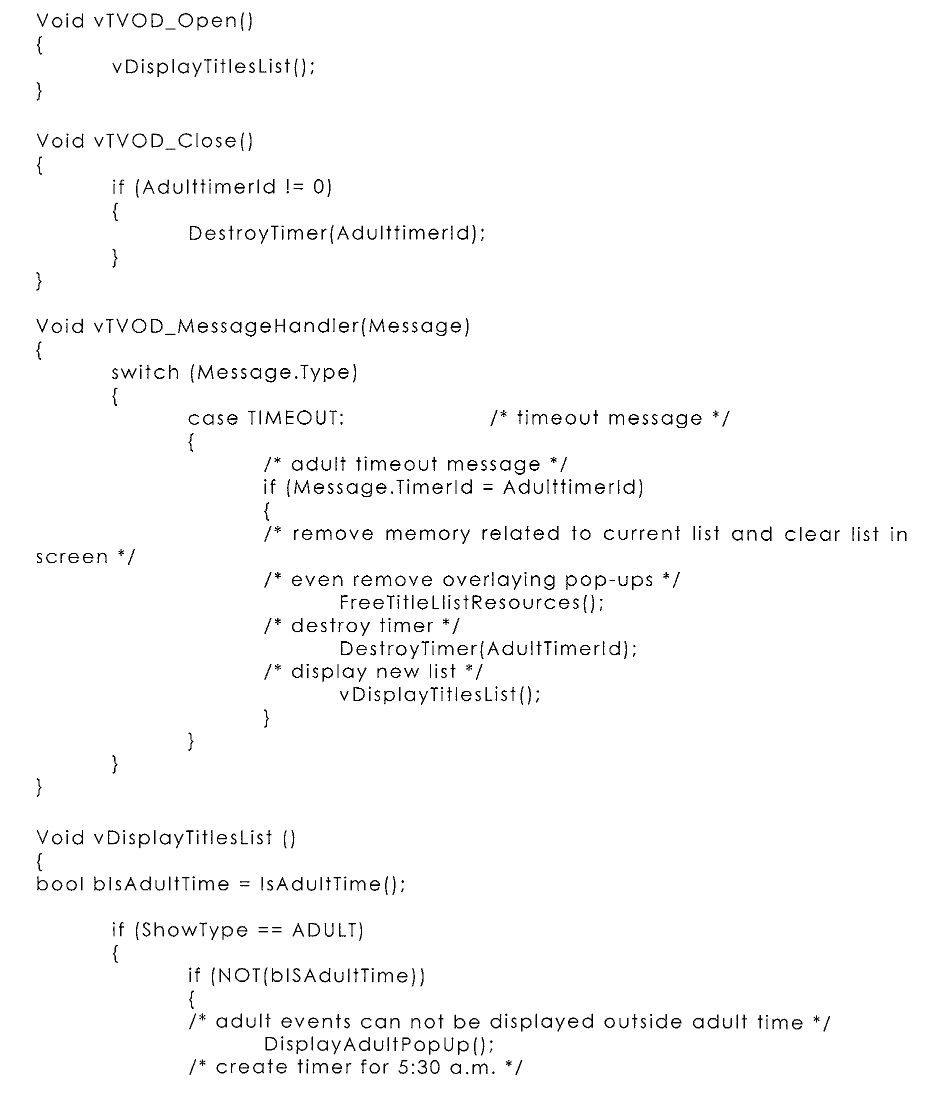

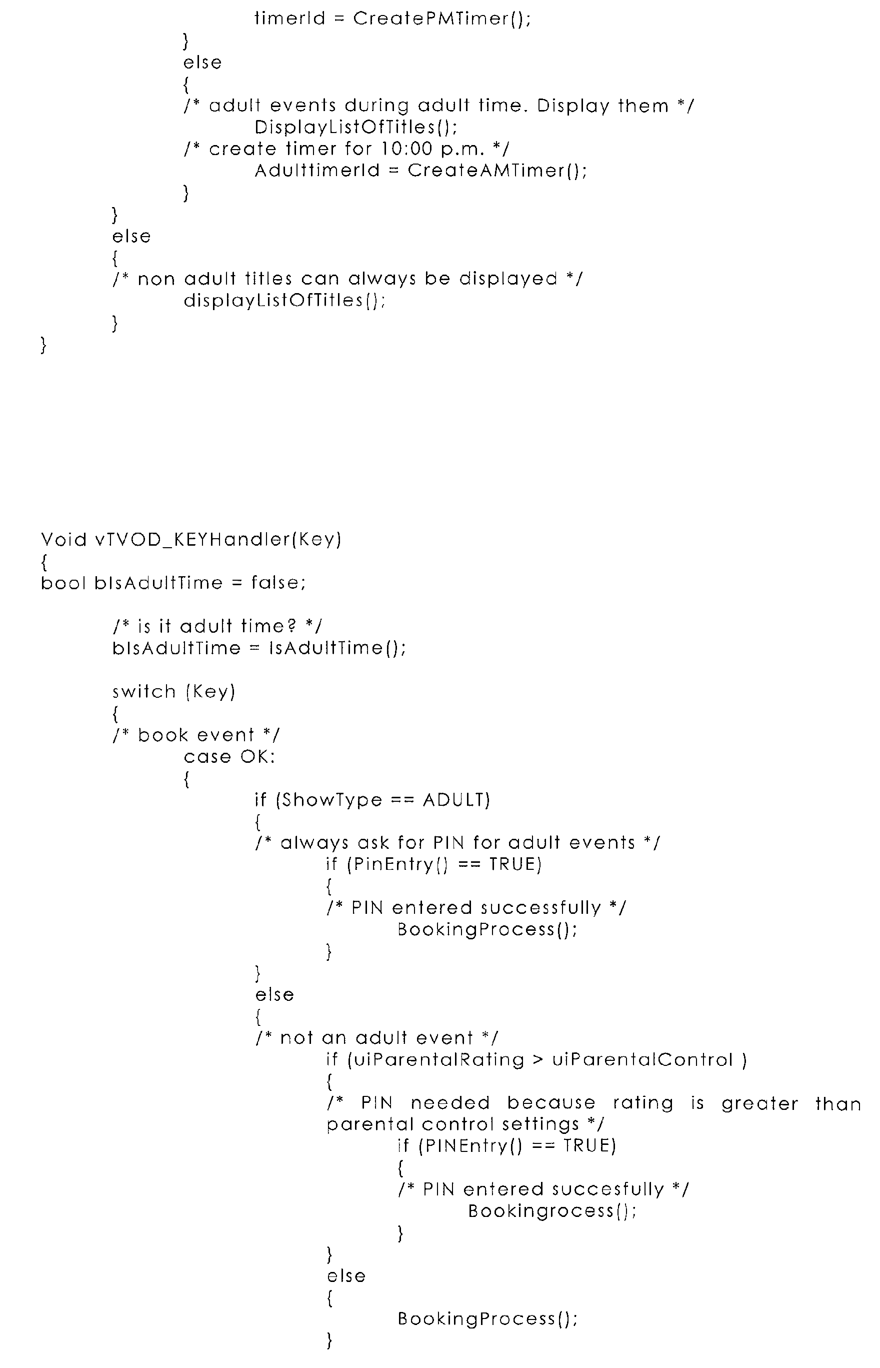

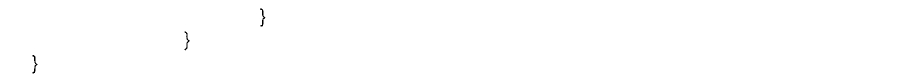

The TVOD Booking lists is the screen displaying all the TVOD bookings made. This screen appears when tuning to a "fake" channel or when requesting it from the main EEPG screen. The content of the list is obtained from the reminder process and it might include adult and non-adult events. Adult events are only shown during adult times. However, the decision whether to include adult titles or not is made within the reminder process.

A timer mechanism has again to be implemented to update the screen automatically, in case the context is open for a period of time, including the adult time boundaries. There is always one timer running. The timer will be set to 10:00 p.m. if the current time is between 5:30 a.m. and 10:00 p.m. and will be set to 5:30 a.m. between 10:00 p.m. and 5:30 a.m.

This context asks the reminder process about a new list, every time a timeout message occurs, making the decision whether to include adult titles or not.

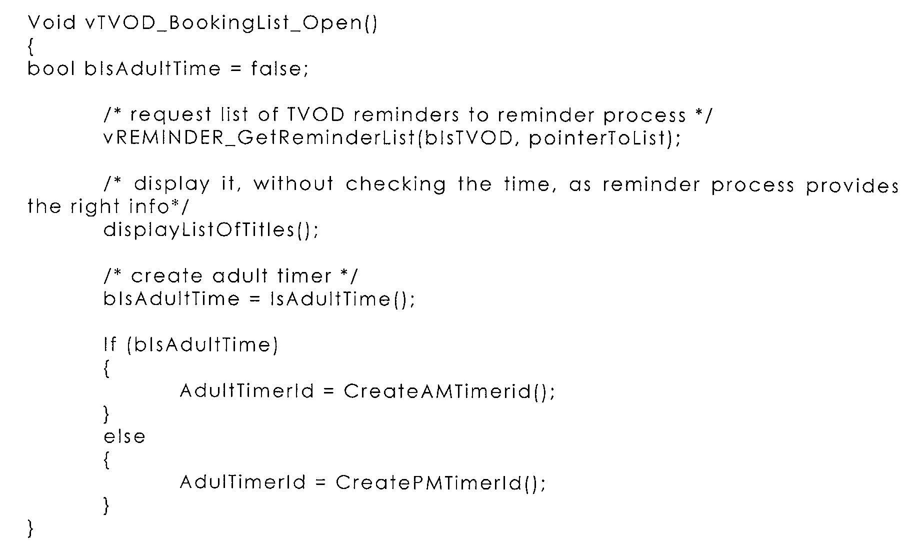

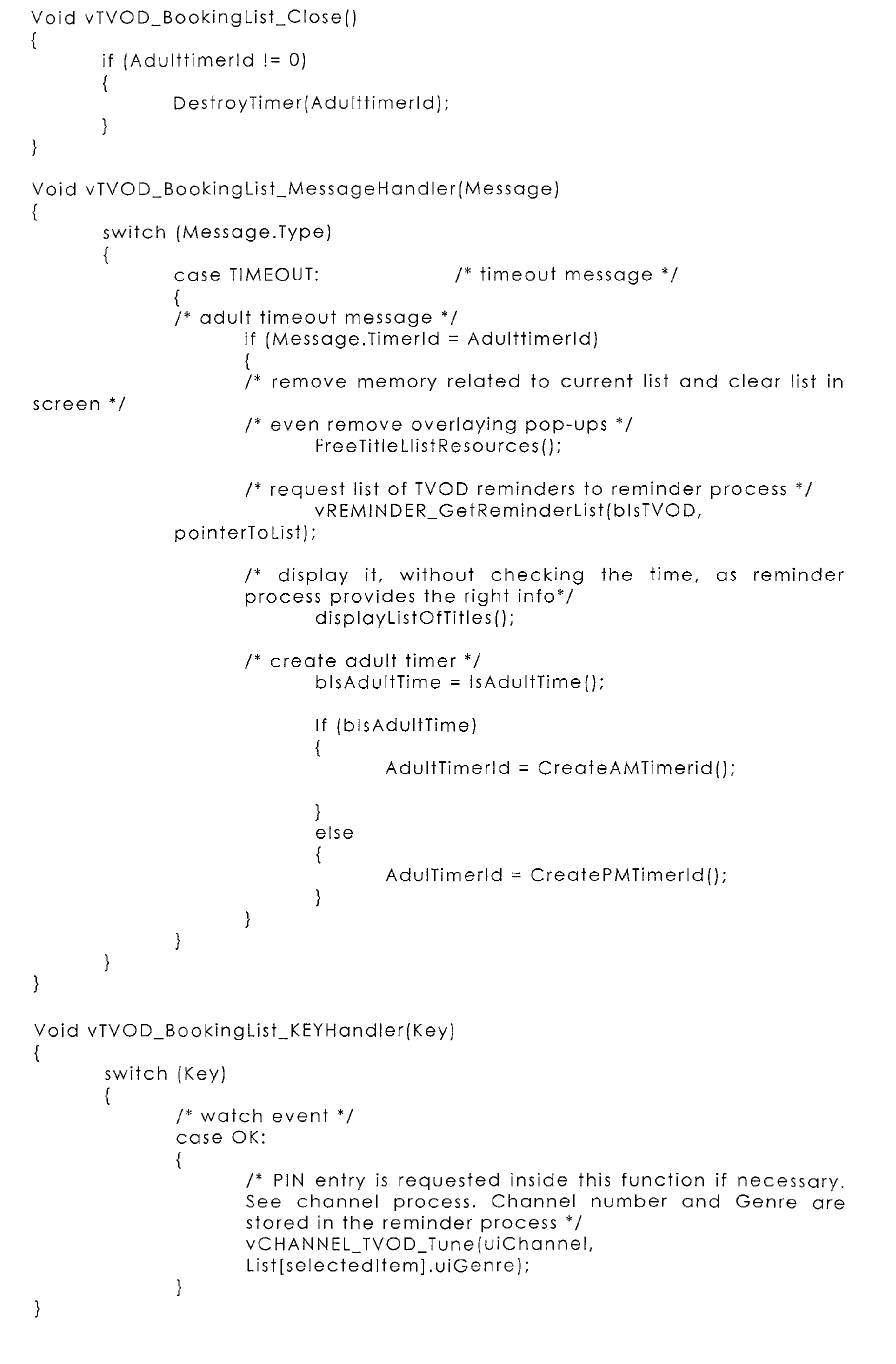

Thus the present invention utilises software to ensure control of the display of restricted programme material automatically without the need for localised, user set security codes, which can normally be avoids and so the present invention provides an additional security layer.

## Claims

1. A television system for the reception of broadcast data and, from said data, the generation of television and/or radio programme material over a range of user selectable channels and/or via a Video on Demand (VoD) service, and at least a portion of the material is provided for restricted access in that it is only permitted to be viewed within a predetermined time period, said system including means for generating an on-screen display of information relating to specific programme material and/or channels and **characterised in that** in the generation of a display which includes information relating to the restricted material, said display is selectively generated in a first format if the information is to be displayed during the predetermined time period and a second format if the information is to be displayed outwith the predetermined time period.

2. A television system according to claim 1 **characterised in that** the first format of display includes all or any selected information about the restricted programme material.

3. A system according to claim 2 **characterised in that** a programme material is accessible via VOD then price and/or order information is included.

4. A system according to claim 1 **characterised in that** the second format of display includes no detailed information about the restricted programme material other than to indicate when said restricted programme material is accessible.

5. A system according to claim 1 **characterised in that** the choice as to the display of the first or second format display is made with respect to the time at which the viewer requests to view restricted programme material.

6. A system according to claim 5 **characterised in that** the time selection is made with respect to stored times which represent start and end times for the predetermined time period.

7. A system according to claim 5 **characterised in that** if the user selection is made within the predetermined time period in the first format of display is shown and if a request is made out with the predetermined time period the second format of display is shown.

8. A television system for the reception of broadcast data and the generation of television and/or radio programme material over a range of user selectable channels and/or via a video on demand (VOD) service and at least a portion of the material is subject to restricted viewing conditions in that it is only available for viewing within a predetermined time period and **characterised in that** if a viewer selects to view a programme of said restricted material, the time of the request is compared with the parameters of the start and end times of the selected programme material and the start and end times of the predetermined time period and only if the start and end times of the selected programme lie within the predetermined time period will a programme material be displayed to the viewer.

9. A system according to claim 8 **characterised in that** upon a viewer selection being made for a restricted programme, if a portion of said programme lies out with the predetermined time period then the selection is refused.

10. A system according to claim 9 **characterised in that** if the selection of a programme is refused, an indication is generated to inform the user of the refusal.

11. A system according to claim 8 **characterised in that** if the refusal of a viewer selection is made then no payment by the viewer to the broadcaster will be possible.

12. A television system for the reception of broadcast data and a generation of television and/or radio programme material over a range of viewer selectable channels and or via a video on demand (VOD) service and at least a portion of said programme material is restricted and **characterised in that** a viewer selection of a portion of said restrictive material is only accepted by the apparatus provided at the viewers premises if the viewer is identified by the apparatus as a person authorised to view the restricted material.

13. A system according to claim 12 **characterised in that** the viewers ability to make the selection determined by comparing a viewer identification code required to be entered by the viewer at the time of selection with a code held in memory.

14. A method for the determination of whether or not to permit, in a television system, the display of restricted programme material and/or information relating thereto, said method comprising the steps of entering into the memory on another reference source, start and end times which define a predetermined period of time, identifying a type or types of programme as restricted programme material which are available for viewing only during the predetermined period of time and representing the same via identification data which is broadcast to the viewer's receiving apparatus along with broadcast data from which the programme material can be generated and, upon the viewer's selection of the restricted programme material, the time of the viewers selection is compared with the start and end times of a predetermined time period and, as a result of the comparison, a decision made with respect to the presentation of the restricted programme material.

15. A method according to claim 14 **characterised in** the display decision is whether or not to allow the selected restricted programme material to be generated and displayed to the viewer.

16. A method according to claim 14 **characterised in that** the display decision is with respect to the format of an onscreen display generated to the viewer in relation to the viewer selected programme material.
